Europäisches Patentamt

European Patent Office

Office européen des brevets

(19)

(11) Veröffentlichungsnummer : **0 076 398**
**B1**

# (12) EUROPÄISCHE PATENTSCHRIFT

(45) Veröffentlichungstag der Patentschrift :
21.01.87

(21) Anmeldenummer : 82108453.0

(22) Anmeldetag : 14.09.82

(51) Int. Cl.⁴ : **G 05 D 23/19, F 24 D 19/10**

(54) Verfahren zum Regeln der Vor- bzw. Rücklauftemperatur einer Warmwasser-Heizanlage.

(30) Priorität : 30.09.81 DE 3138844

(43) Veröffentlichungstag der Anmeldung :
13.04.83 Patentblatt 83/15

(45) Bekanntmachung des Hinweises auf die Patenterteilung : 21.01.87 Patentblatt 87/04

(84) Benannte Vertragsstaaten :
AT DE FR IT

(56) Entgegenhaltungen :
EP-A- 0 049 215
DE-A- 2 811 153
DE-A- 2 901 566
DE-B- 1 105 584
FR-A- 2 077 153
FR-A- 2 436 337
US-A- 3 601 588

(73) Patentinhaber : ROBERT BOSCH GMBH
Postfach 50
D-7000 Stuttgart 1 (DE)

(72) Erfinder : Fauser, Edwin, Dipl.-Ing.
J.-Kerner Strasse 8
D-7257 Ditzingen (DE)
Erfinder : Schirmer, Günter, Ing. grad.
Kellenweg 13
D-7121 Ingersheim (DE)
Erfinder : Witzki, Erwin, Ing. grad.
Römerstrasse 5
D-7441 Neckartenzlingen (DE)

## Beschreibung

### Stand der Technik

Die Erfindung geht aus von einem Verfahren nach der Gattung des Hauptanspruchs. Bei einem bekannten Verfahren dieser Gattung (FR-A-2 077 153) wird die Sollwertabweichung der Testraumtemperatur als Störgröße auf den Regler für die Vor- bzw. Rücklauftemperatur der Heizungsanlage aufgeschaltet. Diese Störgrößenaufschaltung führt zwar zu einer stetigen Korrektur der Heizkurve in dem Sinne, daß sich die Wärmezufuhr zum Testraum verhältnismäßig rasch einem geänderten Wärmebedarf anpaßt. Bei diesem Verfahren ist es jedoch problematisch, die Einflußgrößen von Außentemperatur bzw. Witterung und Sollwertabweichung der Testraumtemperatur optimal aufeinander abzustimmen. Wenn der Einfluß der Sollwertabweichung, d. h. des Testraumfühlers, zu gering ist, so kann es notwendig werden, die vom Installateur bei der Montage der Heizungsanlage im Grundgerät eingestellte Heizkurve mehrfach von Hand nachzustellen und dadurch schrittweise den tatsächlichen Verhältnissen anzupassen. Wenn dagegen der Einfluß des Testraumfühlers zu groß ist, so wird die Regelung praktisch zu einer solchen für die Testraumtemperatur.

In diesem Fall kann eine Änderung des Wärmebedarfs im Testraum eine unerwünscht hohe Temperaturverschiebung in allen anderen beheizten Räumen zur Folge haben, wenn sich deren Wärmebedarf nicht gleich wie jener des Testraums ändert. Das Verfahren der außentemperatur- bzw. witterungsgeführten Vor- bzw. Rücklaufregelung mit Störgrößenaufschaltung der Sollwertabweichung der Testraumtemperatur eignet sich daher in erster Linie für Einfamilienhäuser, in denen der Testraum der Hauptwohnraum, also der Führungsraum der Heizungsregelung für das ganze Haus, sein soll.

### Vorteile der Erfindung

Das erfindungsgemäße Verfahren mit den kennzeichnenden Merkmalen des Hauptanspruchs hat demgegenüber den Vorteil, daß die Regelung praktisch voll der Außentemperatur folgt und der durch die Sollwertabweichung der Testraumtemperatur bedingte Korrektureingriff in die Regelung sich als eine selbsttätige Korrektur bzw. Anpassung der Heizkurve an die den Wärmebedarf beeinflussenden Gebäudeparameter auswirkt. Eine außerhalb der diskreten Ermittlungszeitpunkte liegende, nur den Testraum betreffende Änderung der die Wärmeabfuhr aus diesem Raum bestimmenden Parameter bleibt daher bei der Bemessung der Wärmezufuhr zu den anderen beheizten Räumen weitgehend unberücksichtigt und auch die unter Umständen aufwendigen und Kosten verursachenden Nachstellmaßnahmen der bei der Montage der Heizungsanlage voreingestellten Heizkurve können entfallen. Die während einer Heizperiode gegebenenfalls eintretenden Änderungen von Gebäudeparametern werden selbsttätig ausgeregelt.

Durch die in den Unteransprüchen aufgeführten Maßnahmen sind vorteilhafte Weiterbildungen des im Hauptanspruch angegebenen Verfahrens möglich.

Das Verfahren läßt sich in einfacher Weise durch bekannte Schaltungselemente und -maßnahmen realisieren, wenn die aus der Sollwertabweichung der Testraumtemperatur gebildete Korrekturgröße zur Verschiebung der Heizkurve benutzt wird. Die Sollwertabweichung der Testraumtemperatur und die daraus abgeleitete Korrekturgröße wird zweckmäßig ein- oder zweimal am Tag ermittelt.

Die Ermittlung dieser Werte erfolgt vorteilhaft, wenn nach einer Nachtabsenkung bzw. einem Heizintervall mit abgesenkter Temperatur die für das Aufheizen des Testraumes auf die normale Tagestemperatur benötigte Zeit verstrichen ist und die Testraumtemperatur sich stabilisiert hat. Um ganz sicher zu gehen, daß dies zum Ermittlungszeitpunkt bereits geschehen ist, kann eine Sicherheitszeit von beispielsweise einer Stunde mit einkalkuliert werden. Auch kann zweckmäßig dafür gesorgt werden, daß der Ermittlungszeitpunkt nicht in eine vorgegebene Zeitspanne nach einem, z. B. durch Öffnen der Fenster des Testraumes bedingten, raschen und außergewöhnlichen Temperatureinbruch fällt.

Besonders vorteilhaft ist es, wenn die Heizkurve als Mittelwert über mehrere Tage hinweg korrigiert und an die tatsächlichen Gebäudeparameter angepaßt wird. Zu diesem Zweck wird vorgeschlagen, daß die zu einem bestimmten Zeitpunkt dem Grundgerät neu einzugebende Korrekturgröße gebildet wird durch die algebraische Summe aus der dem Grundgerät bisher eingegebenen Korrekturgröße und aus einem Wert, welcher der zum betreffenden Zeitpunkt tatsächlich ermittelten Korrekturgröße, multipliziert mit einem unter 1 liegenden Einflußstärkefaktor, entspricht. Dadurch wird erreicht, daß die Korrektur bzw. Anpassung der Heizkurve größeren Veränderungen der Witterungslage ermitteln (Übergangszeit-Kalter Winter) ständig nachläuft, wobei der Einflußstärkefaktor die Nachlaufzeitkonstante ergibt. Dadurch ist eine bestmögliche Anpassung an die real erforderliche Heizkurve erreicht.

Um die Einflüsse von Störgrößen, wie Sonneneinstrahlung usw. auszugleichen, kann, wenn der Testraum als Führungsraum für die gesamte Heizungsanlage gelten soll, die Heizkurve in Abhängigkeit von momentanen Sollwertabweichungen im Testraum zusätzlich verschoben werden. Ebenso ist eine Anpassung an die Behaglichkeitskennfelder möglich. Dazu sind weitere Fühler für die Wandtemperatur und die relative Luftfeuchtigkeit erforderlich.

Das beschriebene Verfahren kann sinnvoll und vorteilhaft durch eine Optimierung der Absenkung der Vor- bzw. Rücklauftemperatur vom Tageswert auf einen abgesenkten zweiten Wert und/oder durch eine Optimierung der Wiederaufheizung am Tagesbeginn oder am Ende eines Niedertemperaturintervalls ergänzt werden. Solche Maßnahmen sind an sich bekannt ; sie zielen darauf ab, den Ein- und Ausschaltzeitpunkt der Heizung zu optimieren und die geregelte Temperatur so schnell wie möglich auf den gewünschten Wert anzuheben oder abzusenken.

Zeichnung

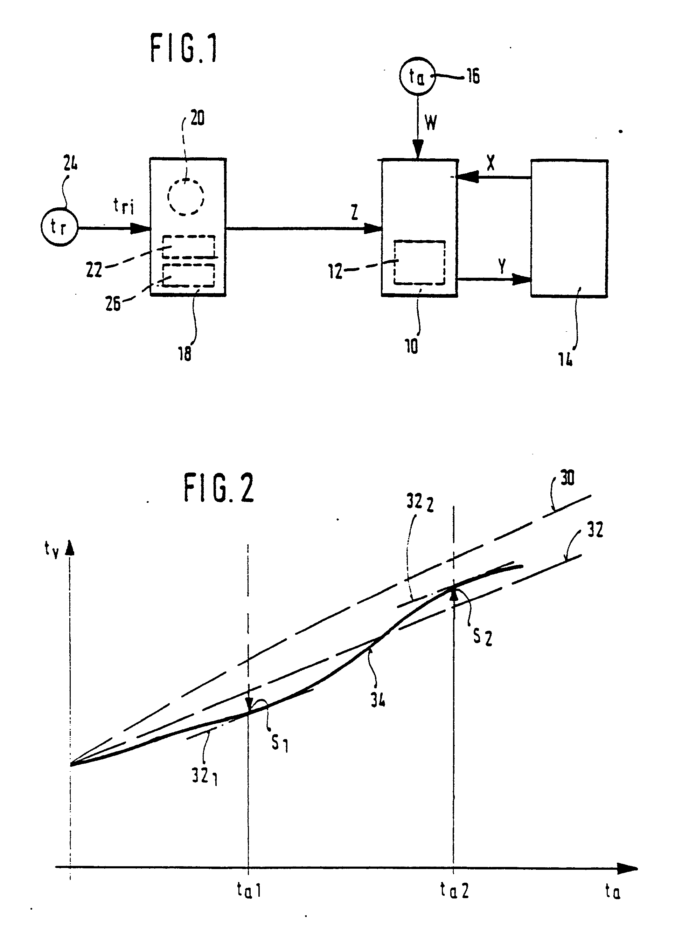

Ein Ausführungsbeispiel des erfindungsgemäßen Verfahrens ist nachstehend anhand der Zeichnung erläutert. Figur 1 zeigt ein vereinfachtes Blockschaltbild einer Regeleinrichtung für die Vorlauftemperatur einer Heizungsanlage und in Figur 2 ist ein Heizkurvenschaubild dargestellt.

Beschreibung des Ausführungsbeispiels

Die Heizungsanlage hat ein beispielsweise im Keller des zu beheizenden Objektes angeordnetes Grundgerät 10, das den Regler 12 für eine Regelstrecke 14 enthält, die von einem Stellglied für die Vorlauftemperatur, z. B. einem Mischer, bis zu einem Vorlauftemperaturfühler reicht. Der Regler 12 führt der Regelstrecke 14 die Stellgröße y zu und der Vorlauftemperaturfühler meldet den Istwert x der Regelgröße « Vorlauftemperatur » an den Regler 12 zurück. Die Regelung der Vorlauftemperatur ist durch die Außentemperatur $t_a$ geführt, wozu mit Hilfe eines Außentemperaturfühlers 16 eine Führungsgröße w und mit deren Hilfe die Stellgröße y gemäß einer Heizkurve gebildet wird, deren Lage und Steilheit vom Installateur am Grundgerät 10 eingestellt werden kann.

Das Grundgerät 10 ist mit einem in einem Testraum angeordneten Fernstellgerät 18 verbunden, das mit einer Schaltuhr 20 mit einstellbaren Schaltzeitpunkten zum Ein- und Ausschalten der Heizungsanlage, sowie zum Absenken des Regelwertes der Vorlauftemperatur (Nachtabsenkung) versehen ist. Das Fernstellgerät 18 enthält ferner von Hand einstellbare Mittel 22 zum willkürlichen Ein- und Ausschalten der Heizungsanlage, Absenken der Vorlauftemperatur und Einstellen der Regelwerte der Vorlauftemperatur für Tag- und Nachtbetrieb. Die vom Fernstellgerät 18 an das Grundgerät 10 übermittelten Signale sind in ihrer Gesamtheit schematisch durch den Pfeil z symbolisiert.

Die vom Installateur am Grundgerät 10 voreingestellte Heizkurve wird erfindungsgemäß an die tatsächlichen Gebäudeparameter selbsttätig dadurch angepaßt, daß die Sollwertabweichung $\Delta t_r$ der Testraumtemperatur $t_r$ zu diskreten Zeitpunkten, beispielsweise einmal am Tage, erfaßt und eine daraus abgeleitete Korrekturgröße dem Regler 12 aufgeschaltet wird.

Zu diesem Zweck ist u. a. ein Raumtemperaturfühler 24 vorgesehen, welcher den Istwert $t_{ri}$ der Testraumtemperatur einer Optimierungsschaltung 26 im Fernstellgerät 18 meldet. Diese vergleicht den Istwert $t_{ri}$ mit dem über die Einstellmittel 22 vorgegebenen Sollwert $t_{rs}$ der Testraumtemperatur und multipliziert die ermittelte Sollwertabweichung $\Delta t_r$ mit einem für durchschnittlich für Heizungsanlagen typischen Einflußfaktor K der Fernsteuerung auf die Vorlauftemperatur und damit die Raumtemperatur. Der Einflußfaktor K kann beispielsweise 160 $\Omega$/K betragen.

Dadurch ergibt sich ein momentaner Wert :

$$V_n = K \cdot \Delta t_r$$

Damit erfindungsgemäß die Korrektur der Heizkurve jeweils nur durch einen über mehrere Tage sich erstreckenden Mittelwert der Momentanwerte $V_n$ erfolgt, wird der jeweils ermittelte Momentanwert $V_n$ mit einem Einflußstärkefaktor a multipliziert, der kleiner als 1 ist und dem am vorangegangenen Ermittlungszeitpunkt ermittelten und in der Optimierungsschaltung 26 gespeicherten Momentanwert $V_{n-1}$ hinzuaddiert. Dadurch ergibt sich die Korrekturgröße V, die zu jedem Ermittlungszeitpunkt in die Regelung eingegeben wird :

$$V = V_{n-1} + a \cdot V_n$$

Der Einflußstärkefaktor a stellt die Nachlaufzeitkonstante dar, mit welcher die Anpassung der vom Installateur voreingestellten Heizkurve an die tatsächlichen Gegebenheiten erfolgt. Bei größeren Veränderungen der Witterungslage (Übergangszeit-Kalter Winter) läuft die Anpassung stetig nach. Dadurch wird immer eine bestmögliche Anpassung an die real erforderliche Heizkurve erreicht.

Die Korrekturgröße V wird in der Optimierungsschaltung 26 in ein Verschiebesignal für die Heizkurve umgesetzt, welches in Figur 1 in der mit dem Pfeil z symbolisierten Gesamtheit aller Signale enthalten ist, welche das Fernstellgerät 18 an das Grundgerät 10 übermittelt. In Figur 2 ist dargestellt, wie dadurch die real erforderliche Heizkurve zustande kommt.

Auf der Abszisse des Schaubilds nach Figur 2 ist die Außentemperatur $t_a$ und auf der Ordinate die Vorlauftemperatur $t_v$ des umlaufenden Heizungswassers aufgetragen. In das Schaubild sind strichliniert zwei Heizkurven 30 und 32 eingetragen, wobei angenommen sei, daß der Installateur bei Inbetriebnahme der Anlage das Gerät auf die Heizkurve 32 eingestellt habe. Ferner ist mit einer volldurchgezogenen Linie eine dritte Heizkurve 34 dargestellt, die der in einem bestimmten Anwendungsfall real erforderlichen Heizkurve entsprechen soll. Die Heizkurve 34 kann dadurch ermittelt werden, daß bei gegebener Außentemperatur $t_a$ die Vorlauftemperatur $t_v$ von Hand so eingeregelt wird, daß die Testraumtemperatur den gewünschten Sollwert hat, und daß man bei einer Vielzahl von unterschiedlichen Außentemperaturen $t_a$ so verfährt. Im angenommenen Fall würde ohne den erfindungsgemäßen Korrektureingriff bei einer Außentemperatur $t_{a1}$, beispielsweise bei 5 °C, die Vorlauftemperatur $t_v$ zu hoch bemessen sein und eine Sollwertabweichung der Testraumtemperatur nach oben eintreten. Bei einer tieferen Außentemperatur $t_{a2}$, beispielsweise bei —10 °C, würden die Verhältnisse umgekehrt liegen und die Räume nicht genügend beheizt sein. Eine empirische Handverstellung der Heizkurve 32 am Grundgerät 10 nach Lage und Steilheit könnte den Mangel nur zum Teil beheben und würde ohne eine zusätzliche Handeinstellung am Fernstellgerät 18 nicht auskommen.

Durch das erfindungsgemäße Verfahren jedoch wird bei jeder Außentemperatur $t_a$ die Heizkurve 32 selbsttätig parallel zu sich selbst so weit verschoben, daß sich im Ergebnis annähernd der gleiche Verlauf wie jener der Heizkurve 34 ergibt. Bei der Außentemperatur $t_{a1}$ bildet die Optimierungsschaltung 26 im Endeffekt eine Korrekturgröße $V_1$ und ein Verschiebesignal $S_1$ aus, welches die Heizkurve parallel zu sich selbst in die neue Lage $32_1$ verschiebt. Diese Verschiebung geht entsprechend dem Einflußstärkefaktor a, der z. B. 0,25 betragen kann, in einzelnen Schritten verzögert vor sich. Bei konstanter Außentemperatur $t_{a1}$ wird die Sollwertabweichung $\Delta t_r$ der Testraumtemperatur schrittweise gegen Null abgebaut, wobei das die Korrekturgröße V mitbestimmende Produkt $aV_n$ gegen Null geht und die Korrekturgröße V schließlich ihren nicht mehr wachsenden Endwert $V = V_{n-1}$ erreicht. Der Regler 12 arbeitet danach solange nach der Heizkurve $32_1$, bis die Außentemperatur $t_a$ bzw. die über mehrere Tage betrachtete Wetterlage sich ändert und danach die Heizkurve in eine andere Lager verschoben wird. Bei der tieferen Außentemperatur $t_{a2}$ wird ein Verschiebesignal $S2$ an den Regler gegeben, welcher danach gemäß Heizkurve $32_2$ regelt.

Die Optimierungsschaltung 26 kann vorzugsweise so erweitert werden, daß auch die Aufheizung am Beginn des Tages und die Nachtabsenkung bezüglich Energieverbrauch und Ein- bzw. Ausschaltzeitpunkt optimiert werden. Um die Einflüsse von kurzzeitig wirkenden Störgrößen, wie Sonneneinstrahlung usw. auszugleichen, kann über die Optimierungsschaltung 26 eine Störgrößenaufschaltung des Reglers erfolgen. Durch die Anordnung der Optimierungsschaltung 26 im Fernstellgerät 18 ergibt sich der Vorteil, daß für die Steuerung der Heizungsanlage keine zusätzlichen Leitungen oder Eingriffe erforderlich sind.

## Patentansprüche

1. Verfahren zum Regeln der Vor- bzw. Rücklauftemperatur einer Warmwasser-Heizungsanlage, bei welchem der Sollwert der Vor- bzw. Rücklauftemperatur gemäß einer am Regler eingestellten Heizkurve witterungs- bzw. außentemperaturabhängig geführt und außerdem die Sollwertabweichung einer Testraumtemperatur erfaßt und daraus eine elektrische Korrekturgröße abgeleitet wird, welche dem Regler zur selbsttätigen Anpassung der Heizkurve an einen tatsächlichen Wärmebedarf eingegeben wird, dadurch gekennzeichnet, daß die Sollwertabweichung der Testraumtemperatur ($\Delta t_r$) nur zu diskreten Zeitpunkten ermittelt und die daraus abgeleitete Korrekturgröße (V) bis zum nächsten Ermittlungszeitpunkt konstant gehalten wird.

2. Verfahren nach Anspruch 1, dadurch gekennzeichnet, daß die aus der Sollwertabweichung der Testraumtemperatur ($\Delta t_r$) gebildete Korrekturgröße (V) zur Verschiebung der Heizkurve benutzt wird.

3. Verfahren nach Anspruch 1 oder 2, dadurch gekennzeichnet, daß die Sollwertabweichung der Testraumtemperatur ($\Delta t_r$) und die daraus abgeleitete Korrekturgröße (V) mindestens einmal pro Tag ermittelt bzw. gebildet wird.

4. Verfahren nach Anspruch 3, dadurch gekennzeichnet, daß die Sollwertabweichung der Testraumtemperatur ($\Delta t_r$) ermittelt und die Korrekturgröße (V) gebildet wird, wenn nach einer Nachtabsenkung bzw. einem Heizintervall mit abgesenkter Temperatur mindestens die für das Aufheizen des Testraumes auf die normale Tagestemperatur benötigte Zeit verstrichen ist und die Testraumtemperatur ($t_r$) sich stabilisiert hat.

5. Verfahren nach einem der vorhergehenden Ansprüche, dadurch gekennzeichnet, daß die zu einem bestimmten Zeitpunkt dem Regler (12) bzw. einem den Regler enthaltenden Grundgerät (10) einzugebende Korrekturgröße (V) gebildet wird durch die algebraische Summe aus dem beim vorhergehenden Zeitpunkt ermittelten Momentanwert ($V_{n-1}$) und einem Wert, welcher dem zum betreffenden Zeitpunkt tatsächlich ermittelten Momentanwert ($V_n$), multipliziert mit einem unter 1 liegenden Einflußstärkefaktor (a), entspricht.

## Claims

1. Process for controlling the flow or return temperature of a hot water heating system, in which the set value of the flow or return temperature is controlled as a function of weather or outside temperature according to a heating curve set on the controller and, furthermore, the set value deviation of a test room temperature is registered and an electrical correcting quantity derived from it, which is entered in the controller for the independent adaptation of the heating curve to an actual heat requirement, characterized in that the set value deviation of the test room temperature ($\Delta t_r$) is determined only at discrete times and the correcting quantity (V) derived from it is held constant until the next determination time.

2. Process according to Claim 1, characterized in that the correcting quantity (V) formed from the set value deviation of the test room temperature ($\Delta t_r$) is used for shifting the heating curve.

3. Process according to Claim 1 or 2, characterized in that the set value deviation of the test room temperature ($\Delta t_r$) and the correcting quantity (V) derived from it is determined or formed at least once per day.

4. Process according to Claim 3, characterized in that the set value deviation of the test room temperature ($\Delta t_r$) is determined and the correcting quantity (V) formed when, after a night-time lowering or a heating interval at lowered temperature, at least the time required for heating up the test room to the normal day-time temperature has elapsed and the test room temperature ($t_r$) has stabilized.

5. Process according to one of the preceding claims, characterized in that the correcting quantity (V) to be entered at a certain time in the controller (12) or a basic appliance (10) containing the controller is formed by the algebraic sum of the momentary value ($V_{n-1}$) determined at the previous time and a value which corresponds to the momentary value ($V_n$) determined at the actual time in question multiplied by an influencing intensity factor (a) below 1.

**Revendications**

1. Procédé pour régler la température de l'eau d'alimentation ou de retour d'une installation de chauffage à eau chaude, procédé dans lequel la valeur de consigne de la température de l'eau d'alimentation ou de retour est commandée, en fonction des conditions climatiques ou de la température extérieure, conformément à une courbe de chauffage placée sur le régulateur, tandis qu'en outre l'écart par rapport à la valeur de consigne de la température d'un local de référence est détecté et qu'il en est extrait une grandeur électrique de correction qui est fournie au régulateur pour assurer l'adaptation automatique de la courbe de chauffage à un besoin de chaleur effectif, procédé caractérisé en ce que l'écart ($\Delta t_r$) par rapport à la valeur de consigne de la température du local de référence n'est déterminé qu'à des instants discrets et que la grandeur de correction (V) qui en est extraite est maintenue constante jusqu'à l'instant de détermination immédiatement suivant.

2. Procédé selon la revendication 1, caractérisé en ce que la grandeur de correction, (V) élaborée à partir de l'écart ($\Delta t_r$), par rapport à la valeur de consigne, de la température du local de référence, est utilisée pour décaler la courbe de chauffage.

3. Procédé selon la revendication 1 ou 2, caractérisé en ce que l'écart ($\Delta t_r$), par rapport à la valeur de consigne, de la température du local de référence, et la grandeur de correction (V) qui en est extraite sont déterminées ou élaborées au moins une fois par jour.

4. Procédé selon la revendication 3, caractérisé en ce que l'écart ($\Delta t_r$), par rapport à la valeur de consigne, de la température du local de référence, est déterminé, et que la grandeur de correction (V) est élaborée lorsque, après une baisse nocturne ou bien un intervalle de chauffe avec abaissement de la température, au moins le temps nécessaire pour le réchauffement du local de référence à la température normale du jour, s'est écoulé et que la température ($t_r$) du local de référence s'est stabilisée.

5. Procédé selon une des précédentes revendications, caractérisé en ce que la grandeur de correction (V) devant être fournie à un instant déterminé au régulateur (12), ou bien à un appareil de base (10) incluant ce régulateur, est formée par la somme algébrique de la valeur momentanée ($V_{n-1}$) déterminée à l'instant précédent et d'une valeur qui correspond à la valeur momentanée ($V_n$) effectivement déterminée à l'instant considéré, multipliée par un facteur d'intensité d'influence (a), inférieur à 1.

FIG.1

FIG.2